# EUROPÄISCHE PATENTSCHRIFT

(11) **EP 3 255 373 B1**
(45) Veröffentlichungstag und Bekanntmachung des Hinweises auf die Patenterteilung: **24.04.2019**
(21) Anmeldenummer: 16173728.3
(22) Anmeldetag: 09.06.2016
(51) Int. Cl.: G01B 5/20, G01M 13/02, G01B 7/14

(54) **BERÜHRUNGSMESSUNG AN DER ZAHNFLANKE EINES ZAHNRADBAUTEILS**
CONTACT MEASUREMENT ON THE TOOTH FLANK OF A GEAR WHEEL
MESURE DE CONTACT AU NIVEAU DU FLANC D'UNE DENT D'UNE ROUE DENTÉE

(43) Veröffentlichungstag der Anmeldung: 13.12.2017
(73) Patentinhaber: Klingelnberg AG, 8050 Zürich (CH)
(72) Erfinder: Ribbeck, Karl-Martin, 42897 Remscheid (DE); Frischtatzky, Rafael, 51469 Bergisch-Gladbach (DE); Schalaster, Rolf, 42929 Wermelskirchen (DE)
(74) Vertreter: Heusch, Christian

(56) Entgegenhaltungen:
- DE-A1- 10 044 879
- US-A1- 2014 347 043
- GOCH ET AL: "Gear Metrology", CIRP ANNALS, ELSEVIER BV, NL, CH, FR, Bd. 52, Nr. 2, 1. Januar 2003 (2003-01-01) , Seiten 659-695, XP022127946, ISSN: 0007-8506, DOI: 10.1016/S0007-8506(07)60209-1

## Beschreibung

Die Erfindung betrifft das Durchführen einer Berührungsmessung an mindestens einer Zahnflanke eines Zahnradbauteils und eine Meßvorrichtung, die entsprechend ausgestattet ist.

### HINTERGRUND DER ERFINDUNG

Im Verzahnungsgebiet sind die Topografie und die Oberflächeneigenschaften eines Zahnradbauteils wichtige Qualitätsmerkmale.

Es gibt daher verschiedene Messvorrichtungen zum Erfassen der Topografie und der Oberflächeneigenschaften von Zahnradbauteilen. Es wird dabei zwischen berührungslos arbeitenden und tastenden Verfahren unterschieden.

Typischerweise wird bei der mechanischen Abtastung ein Taster über die Oberfläche geführt. Das Ergebnis ist ein über den Tastweg aufgezeichnetes Höhensignal, das auch als Oberflächenprofil bezeichnet wird. Bei Stirnrädern wird typischerweise nur eine Linie entlang der Profillinie und der Flankenlinie gemessen. Bei Kegelrädern wird beispielsweise ein virtuelles Gitter auf die Radialprojekt einer Zahnflanke gelegt, um dann Sollmesspunkte anhand dieses Gitters zu definieren. Um die Topografie von Kegelrad-Zahnflanken zu prüfen, reichen relativ grobmaschige Gitter aus.

Die meisten tastenden Messverfahren sind seriell arbeitende Verfahren, was bei einer Erhöhung der Messgenauigkeit zu einem erhöhten Zeit- und Rechenaufwand führt. Geht man von einem Zahnrad mit 10 Zähnen aus, dann gibt es 20 Zahnflanken, die zu vermessen sind. Wenn man pro Zahnflanke 5 x 9 Messpunkte vorsieht, dann werden im Rahmen einer solchen Messung 900 Istmeßwerte erzeugt. Beim rechnerischen Auswerten und Aufbereiten dieser Istmeßwerte, werden diese z.B. mit entsprechenden Solldaten in Bezug gesetzt. An diesem einfachen Zahlenbeispiel ist der rechnerische Aufwand zu erkennen, der betrieben werden muss.

Aus DE 100 44 879 A1 ist z.B. bekannt, eine Zahnflanke eines Zahnrads mit einer Zylinderschnecke insofern berührend abzutasten als sich das Zahnrad und die Zylinderschnecke miteinander im Eingriff befinden und sich gegeneinander abwälzen. Durch axiale Verschiebung der Zylinderschnecke kann dabei die Auflösung zur detaillierten Untersuchung von bestimmten Zahnflankenpositionen variiert werden. Weiterhin sind aus dem Artikel "Gear Metrology" von G. Goch (CIRP ANNALS, ELSEVIER BV, NL, CH, FR, Bd. 52, Nr. 2, 1. Januar 2003 (2003-01-01), Seiten 659-695, XP022127946, ISSN: 0007-8506, DOI: 10.1016/30007-8506(07)60209-1) Berührungsmessungen an Zahnflanken von Zahnrädern bekannt, bei denen Taster mit einer Tastkugel entlang der Zahnflanken geführt werden.

Da die Anforderungen an Verzahnungen immer höher werden, sind häufig auch Untersuchungen erforderlich, die Aussagen über die Mikrostruktur der Zahnflanken zulassen. Solche Aussagen sind aber nur möglich, wenn die Auflösung der Messungen erhöht wird.

Es ist eine Aufgabe der Erfindung einen Messansatz bereit zu stellen, der es ermöglicht Oberflächeneigenschaften von Zahnflanken schnell, genau und reproduzierbar zu messen.

Die Merkmale des Verfahrens der Erfindung sind dem 1. Patentanspruch zu entnehmen. Die Merkmale der Vorrichtung der Erfindung sind dem 19. Patentanspruch zu entnehmen. Vorteilhafte Ausgestaltungen des erfindungsgemäßen Verfahrens sind den abhängigen Ansprüchen zu entnehmen.

Es ist ein Aspekt bevorzugter Ausführungsformen der Erfindung, dass Messungen so durchgeführt werden, dass Istmeßwerte z.B. der Topografie mit Istmeßwerten der Oberfläche einfach rechnerisch in Bezug zu setzen sind. Um das zu ermöglichen, erfolgt das Messen der Oberflächeneigenschaft(en)
Vorzugsweise erfolgt bei allen Ausführungsformen das Messen innerhalb eines kritischen Bereichs mit einem Koordinatensystem (z.B. in Form eines zweiten Meßgitters), das mit einem Koordinatensystem (z.B. in Form eines ersten Meßgitters) eines Maximalbereichs in einem bekannten geometrischen Bezug steht.

Vorzugsweise steht bei allen Ausführungsformen das zweite Meßgitter mit dem ersten Meßgitter in einem bekannten geometrischen Bezug. Dieser geometrische Bezug kann sich bei allen Ausführungsformen z.B. daraus ergeben, dass sich das erste Meßgitter und das zweite Meßgitter mindestens teilweise überlappen. Das erste Meßgitter und das zweite Meßgitter können bei allen Ausführungsformen auch den selben Bereich einer Flanke abdecken, d.h. die beiden Meßgitter können auch deckungsgleich sein, wobei sie sich jedoch durch eine unterschiedliche Netzdichte unterscheiden. Das erste Meßgitter und das zweite Meßgitter können bei allen Ausführungsformen auch dadurch in einen bekannten geometrischen Bezug gebracht werden, dass die beiden Meßgitter mindestens einen Messpunkt (Gitterpunkt des Meßgitters) miteinander gemeinsam haben.

Der Begriff des Meßgitters ist im vorliegenden Zusammenhang breit auszulegen. Es kann sich bei allen Ausführungsformen z.B. um ein Meßgitter mit konstanter Netzdichte handeln, oder es kann sich bei allen Ausführungsformen um ein Meßgitter handeln, dessen Netzdichte variabel ist.

Das zweite Meßgitter kann bei allen Ausführungsformen z.B. ein Meßgitter mit einer höheren konstanten oder variablen Netzdichte sein als die konstante oder variable Netzdichte des ersten Meßgitters.

Vorzugsweise geht es bei allen Ausführungsformen um das anwendungsspezifische Verzahnungsmessen. Zu diesem Zweck werden gemäß Erfindung Istmeßdaten oder Istmeßgitter in Abhängigkeit von der zu messenden Verzahnung ermittelt.

Die Erfindung ermöglicht es Bereiche als kritische Bereiche zu definieren, die anwendungsspezifisch (z.B. unter Last oder lastfrei) relevant sind.

Vorzugsweise kann bei allen Ausführungsformen die Position und/oder Dimension eines kritischen Bereichs automatisch (vorzugsweise durch Rechnerunterstützung) festgelegt werden, um dann in diesem kritischen Bereich Messungen mit höherer Genauigkeit durchführen zu können.

Durch die Erfindung kann die Genauigkeit der Messung lokal erhöht werden und die Meßzeit wird im Vergleich zu einer hochauflösenden Messung der gesamten Zahnflanke signifikant reduziert.

Vorzugsweise wird das Verfahren der Erfindung so eingesetzt, dass eine Zahnflanke mit einem gröberen ersten Messgitter und ein kritischer Teilbereich der Zahnflanke mit einem feineren zweiten Messgitter kombiniert in einem Messdurchlauf ermittelt werden können. Besonders vorteilhaft ist es, wenn diese beiden Messgitter zueinander in einem (rechnerisch/geometrisch) bekannten Bezug stehen, z.B. indem die beiden Messgitter sich mindestens teilweise überlappen oder indem die beiden Messgitter mindestens einen Messpunkt gemeinsam haben.

Eine erfindungsgemäße Verwendung eines Messtasters dient speziell dem Messen der Oberflächeneigenschaft der Zahnflanken von Zahnrädern, wobei die Längsachse des Messtasters so geführt wird, dass diese flach über die Zahnflanke geführt wird, um Istmeßwerte im Rahmen eines ersten gröberen Gitters und im Rahmen eines zweiten feineren Gitters zu ermitteln.

Es ist ein Vorteil der Erfindung, dass zum Beispiel die Welligkeit von Zahnflanken schnell und zuverlässig ermittelt werden kann.

Es ist ein Vorteil der Erfindung, dass zum Beispiel Aussagen über das zu erwartende Geräuschverhalten von Zahnrädern schnell gemacht werden können.

Es ist ein Vorteil der Erfindung, dass das Verfahren zum Beispiel auch zum Untersuchen der Rissbildung, Kolkbildung und anderer Verschleißmerkmale an Zahnradflanken eingesetzt werden kann.

Die erwähnten ersten und zweiten Meßgitter, oder das Meßgitter mit lokal erhöhter Messdichte, können bei allen Ausführungsformen anhand einer Schnittdarstellung und/oder anhand einer Projektion der betroffenen Flanke definiert werden, oder sie können auf der realen Flanke definiert werden.

Vorzugsweise haben das erste und/oder das zweite Meßgitter bei allen Ausführungsformen eine regelmässige Form, wobei diese regelmässige Form in einer Schnittdarstellung und/oder in einer Projektion der Flanke und/oder auf der realen Flanke definiert sein kann/können.

Die Erfindung lässt sich im Zusammenhang mit 1D-, 2D- und 3D-Messvorrichtungen verwenden.

### ZEICHNUNGEN

Ausführungsbeispiele der Erfindung werden im Folgenden unter Bezugnahme auf die Zeichnungen näher beschrieben.
- **FIG. 1**: zeigt eine perspektivische Ansicht einer Vorrichtung (hier in Form eines CNC-Messgeräts), die zum Durchführen des erfindungsgemäßen Verfahren ausgestattet ist;
- **FIG. 2A**: zeigt eine schematische Ansicht eines Tellerrads im Radialschnitt, wobei im Bereich einer Zahnflanke ein gleichmäßiges (Meß-)Gitter gezeigt ist;
- **FIG. 2B**: zeigt eine vergrößerte Ansicht der Zahnflanke der Fig. 2A, wobei zusätzlich zum dem gleichmäßigen (Mess-)Gitter ein beispielhaftes Tragbild gezeigt ist;
- **FIG. 2C**: zeigt die Ansicht der Fig. 2B, wobei zusätzlich zu dem (Mess-)Gitter und dem Tragbild ein kritischer Bereich durch ein feineres gleichmäßiges (Mess-)Gitter definiert ist;
- **FIG. 3A**: zeigt eine schematische Perspektivansicht eines einzelnen Zahnes eines Kegelrads, wobei auf der konkaven Flanke ein beispielhaftes (Meß-)Gitter gezeigt ist;
- **FIG. 3B**: zeigt eine schematische Perspektivansicht des Zahnes der Fig. 3A, wobei auf der konkaven Flanke ein feineres (Meß-)Gitter als Beispiel gezeigt ist;
- **FIG. 3C**: zeigt eine schematische Perspektivansicht eines einzelnen Zahnes eines Kegelrads, wobei auf der konkaven Flanke ein beispielhaftes (Meß-)Gitter gezeigt ist, das einen ersten Bereich mit gröberer Gitterstruktur (Auflösung) und einen zweiten Bereich mit feinerer Gitterstruktur (Auflösung) umfasst, wobei der erste Bereich in den zweiten Bereich und der zweite Bereich in den ersten Bereich übergehen;
- **FIG. 4**: zeigt den schematischen Aufbau eines beispielhaften Tasters beim erfindungsgemäßen Abtasten der Zahnflanke eines Ritzels.

### DETAILIERTE BESCHREIBUNG

Es geht hier unter anderem um die Topografie (z.B. die Balligkeit) und um Oberflächeneigenschaften (z.B. die Welligkeit) von Zahnflanken 7.1. Der Begriff Topografie beschränkt sich eher auf makroskopische, im Sinne von strukturellen Aussagen. Der Begriff Oberflächeneigenschaft beschränkt sich eher auf mikroskopische, im Sinne von punktuellen oder lokalen Aussagen. Typischerweise geht es im Zusammenhang mit Oberflächeneigenschaften hier um Strukturen, Elemente und Merkmale einer Zahnflanke 7.1, die eine Grösse im Bereich von nm bis ca. 500 µm haben.

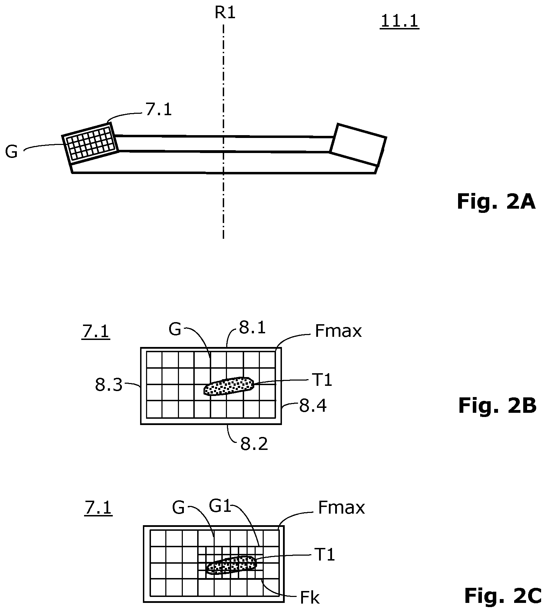

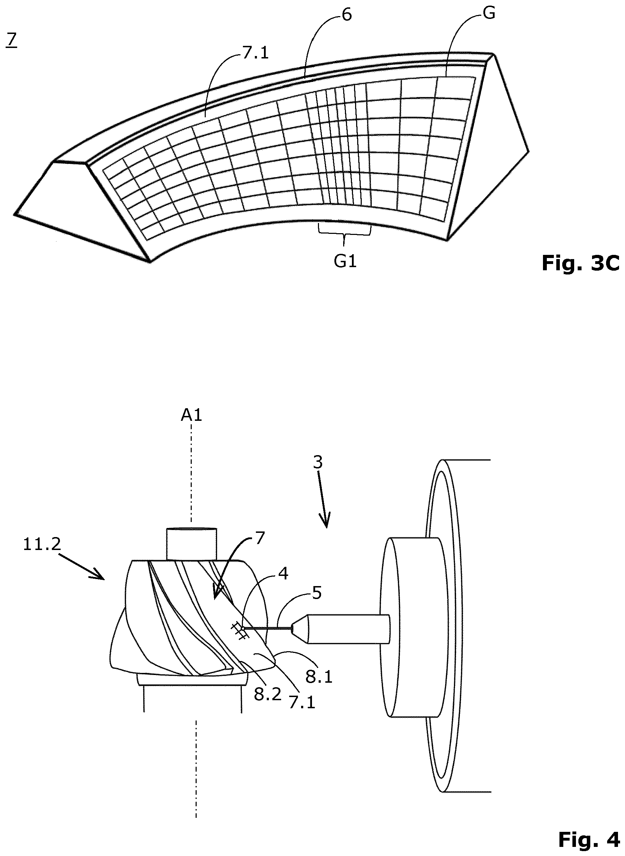

Die Zahnradbauteile werden hier allgemein mit dem Bezugszeichen 11 bezeichnet. Falls auf ein spezielles Zahnradbauteil Bezug genommen werden soll, so ist dieses spezielle Zahnradbauteil mit einem Index versehen. In Fig. 2A ist z.B. ein Tellerrad 11.1 als spezielles Zahnradbauteil gezeigt. In Fig. 4 ist z.B. ein Ritzel 11.2 als spezielles Zahnradbauteil gezeigt.

Es geht hier um Meßverfahren, bei denen ein messender Taster 3 kontinuierlich im Kontaktmodus über die zu messende Oberfläche geführt wird, oder bei der ein schaltender Taster 3 punktuell mit der Oberfläche in Kontakt gebracht wird.

Es geht bei allen Ausführungsformen somit um ein kontaktbasiertes Verfahren, das auch als tastendes Verfahren bezeichnet wird. Daher wird diese Form der Messung hier auch als Berührungsmessung bezeichnet. Der Kontakt des Tasters mit der Oberfläche kann punktuell sein (z.B. an den Gitterpunkten eines gleichmäßigen und ungleichmäßigen Gitters), oder er kann sich z.B. entlang einer geraden Linie (z.B. entlang einer Zeile eines Gitters), entlang einer Kurve oder entlang eines Polygonenzugs erstrecken.

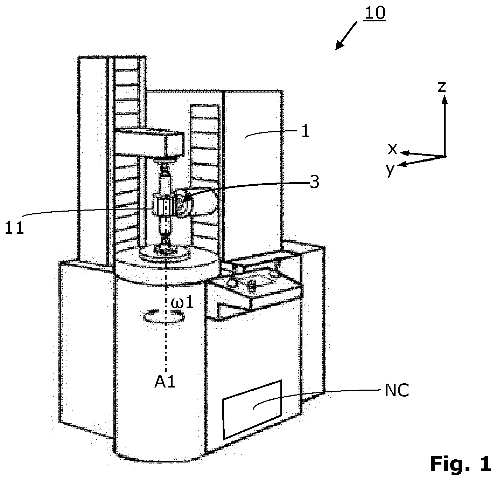

Um die Topografie und die Oberflächeneigenschaften von Zahnflanken 7.1 zuverlässig, reproduzierbar und hochgenau vermessen zu können, wird das Zahnradbauteil 11.1, wie beispielhaft in Fig. 2A gezeigt, in einer Meßvorrichtung 10, wie beispielhaft in Fig. 1 gezeigt, einer Berührungsmessung unterzogen. Weitere Details zu einer solchen Messung sind auch im Zusammenhang mit der Fig. 4 beschrieben. Im Rahmen einer solchen Berührungsmessung können beispielweise die folgenden Schritte M1 bis M4 durchgeführt werden:
M1. Vorgeben eines Maximalbereichs Fmax bezogen auf die Zahnflanke 7.1, wie beispielhaft in Fig. 2B gezeigt. Gemäß Erfindung kann der Maximalbereich Fmax auf verschiedene Art und Weise vorgegeben werden. Das Vorgeben des Maximalbereichs Fmax erfolgt vorzugsweise bei allen Ausführungsformen Prozessor-gestützt. Im Folgenden sind hierzu Beispiele genannt.
   a) Bei der Auslegung der Verzahnung des Zahnradbauteils 11 werden typischerweise Sollmessdaten der Zahnflanken 7.1 des Zahnradbauteils 11 definiert und zur späteren Verwendung abgespeichert. Diese Sollmessdaten können bereits bei der Auslegung in einem Maximalbereich Fmax der Zahnflanken 7.1 definiert sein. In diesem Fall werden die entsprechenden Angaben im Schritt M1 aus einem Speicher geladen.
   b) Der Maximalbereich Fmax kann entweder bei der Auslegung oder vor dem Durchführen einer Berührungsmessung definiert werden. Das kann z.B. durch die manuelle Eingabe von Einrückungen oder Rändern unter Zuhilfenahme einer (grafischen) Benutzeroberfläche erfolgen. In Fig. 2B ist anhand eines Beispiels zu erkennen, dass der Maximalbereich Fmax z.B. als ein Rechteck definiert werden kann. Am Rand der Zahnflanke 7.1 der Fig. 2B sind schmale Randstreifen zu erkennen, die nicht im Bereich eines Meßgitters G liegen. In Fig. 2B ist die Zahnflanke 7.1 oben durch den Zahnkopf 8.1, unten durch den Zahnfuß 8.2, sowie links durch das äussere Zahnende 8.3 und rechts durch das innere Zahnende 8.4 begrenzt. Die schmalen Randstreifen, respektive die Einrückungen können z.B. in Millimetern oder prozentual definiert werden.
   c) Allgemein kann der Maximalbereich Fmax auch als Polygonenzug durch die Vorgabe relativer oder absoluter Größen definiert werden.
M2. Vorgeben eines kritischen Bereichs Fk bezogen auf die Zahnflanke 7.1, wobei der kritische Bereich Fk komplett innerhalb des Maximalbereichs Fmax liegt wie, beispielhaft in Fig. 2C gezeigt, oder wobei der kritische Bereich Fk den Maximalbereich Fmax mindestens teilweise oder ganz überlappt. Wie die Verwendung des Wortes "kritisch" bereits andeutet, handelt es sich um einen Bereich, der beim Durchführen der Berührungsmessung von besonderem Interesse ist. Der Begriff "kritisch" soll nicht eng verstanden werden. Es geht bei dem kritischen Bereich Fk um einen Bereich, der von besonderem Interesse ist. In den Figuren 2A und 2B ist beispielhaft das Tragbild T1 der Zahnflanke 7.1 gezeigt. Um das Bauteil im Bereich dieses Tragbildes T1 genauer untersuchen zu können, wird der kritische Bereich Fk beispielsweise so definiert und positioniert, dass er das Tragbild T1 einschließt. Gemäß Erfindung kann der kritische Bereich Fk auf verschiedene Art und Weise vorgegeben werden. Das Vorgeben des kritischen Bereichs Fk kann vorzugsweise bei allen Ausführungsformen Prozessor-gestützt erfolgen. Im Folgenden sind hierzu Beispiele genannt.
   a) Bei der Auslegung der Verzahnung des Zahnradbauteils 11 kann der kritische Bereich Fk zur späteren Verwendung abgespeichert werden.
   b) Es kann eine Simulation zum Einsatz kommen, um z.B. die Lage des Tragbilds T1 der Zahnflanke 7.1 vorauszubestimmen. Anhand dieser Simulation kann dann der kritische Bereich Fk definiert werden.
   c) Es kann aber auch eine Messung z.B. des Laufverhaltens des Zahnradbauteils 11 mit einem anderen Zahnrad vorgenommen werden, um so einen Bereich zu ermitteln, der genauer zu untersuchen ist. In diesem Fall wird der kritische Bereich Fk dann so definiert, dass er den Bereich einschließt, der genauer zu untersuchen ist.
   d) Der kritische Bereich Fk kann aber auch nach einer bildgebenden Untersuchung der Zahnflanke 7.1 definiert werden.
M3. Ausführen von ersten Relativbewegungen mit einem schaltenden oder messenden Taster 3 einer Meßvorrichtung 10, um eine Tastspitze, -kufe oder -kugel 4 des Tasters 3 so entlang der Zahnflanke 7.1 zu führen, dass für mehrere Stellen der Zahnflanke 7.1 innerhalb des Maximalbereichs Fmax Istmeßwerte mit einer ersten Auslösung bereitgestellt werden. Bei den in den Figuren 2A - 2C gezeigten Beispielen erfolgt das Durchführen der ersten Berührungsmessung anhand eines regelmäßigen Meßgitters G, das für den Maximalbereich Fmax ze = 5 Zeilen und s = 9 Spalten vorgibt. Meßwerte werden bei diesem Beispiel jeweils an den Schnittpunkten (Gitterpunkten) der Zeilen und Spalten erfasst. Die erste Auflösung beträgt bei diesem Beispiel 5 x 9 Meßwerte bezogen auf die Fläche Fmax.
   Das Ausführen der ersten Relativbewegung kann bei allen Ausführungsformen kontinuierlich erfolgen, indem ein messender Taster 3 zeilenweise im Maximalbereich Fmax über die Zahnflanke 7.1 geführt wird. In diesem Fall können die Istmeßwerte z.B. dadurch erfasst werden, dass in äquidistanten Abständen jeweils die aktuell vorliegenden Meßwerte in einen Speicher geschrieben werden. Alternativ können die Meßwerte bei einer gleichförmigen Bewegung des Tasters 3 in gleichen Zeiteinheiten (getaktet) erfasst und gespeichert werden.
   Das Ausführen der ersten Relativbewegung kann bei allen Ausführungsformen aber auch diskret erfolgen, indem der Taster 3 an jeden einzelnen Gitterpunkt des Gitters G geführt wird, um dort lokal eine Messung durchzuführen. Das Ausführen diskreter Messungen eignet sich vor allem für schaltende Taster.
M4. Ausführen von zweiten Relativbewegungen mit einer Tastspitze, -kufe oder -kugel 4 eines Tasters 3 der Meßvorrichtung 10 (es kann bei allen Ausführungsformen derselbe Taster 3 zum Einsatz kommen wie im Schritt M3, es kann aber auch ein zweiter Taster eingesetzt werden), um den Taster 3 so entlang der Zahnflanke 7.1 zu führen, dass für mehrere Stellen der Zahnflanke 7.1 innerhalb des kritischen Bereichs Fk Istmeßwerte mit einer zweiten Auflösung bereitgestellt werden. Die zweite Auslösung ist höher als die erste Auflösung. Das Durchführen der Berührungsmessung im kritischen Bereich Fk kann bei allen Ausführungsformen, wie zuvor beschrieben, kontinuierlich oder diskret vorgenommen werden. Bei den in den Figuren 2A - 2C gezeigten Beispielen erfolgt das Durchführen der Berührungsmessung im kritischen Bereich Fk anhand eines engmaschigeren regelmäßigen Meßgitters G1, das für den kritischen Bereich Fk ze = 5 Zeilen und s = 9 Spalten vorgibt. Meßwerte werden bei diesem Beispiel jeweils an den Schnittpunkten der Zeilen und Spalten vorgenommen. Die zweite Auflösung beträgt bei diesem Beispiel 5 x 9 Meßwerte bezogen auf die Fläche Fk (die zweite Auflösung kann aber z.B. auch andere Werte haben als die erste Auflösung). Die zweite Auflösung ist grösser, da die Fläche Fk kleiner ist als die Fläche Fmax. Das Meßgitter G1, das beim Messen des kritischen Bereichs Fk zur Anwendung kommt, kann bei allen Ausführungsformen räumlich mit dem Meßgitter G zusammenfallen, wie in Fig. 2C gezeigt, wobei sich z.B. mindestens eine Zeile ze der Meßgitters G mit einer Zeile ze der Meßgitters G1 deckt. Eine solche Konstellation hat den Vorteil, dass sämtliche Istmeßwerte im selben Bezugskoordinatensystem liegen. Falls im Schritt M4 ein Meßgitter G1 verwendet wird, dass sich nicht mit dem Meßgitter G deckt, so werden rechnerische Anpassungen (z.B. mittels Koordinatentransformation) vorgenommen, um die Istmeßwerte miteinander in Bezug setzen zu können.

Das Verfahren der Erfindung kann bei allen Ausführungsformen so durchgeführt werden, dass die erste Relativbewegung in die zweite Relativbewegung übergeht und dann wieder in erste, wie später anhand der Fig. 3C beschrieben wird.

Das Verfahren der Erfindung kann bei allen Ausführungsformen so durchgeführt werden, dass der kritische Bereich Fk sowohl im Rahmen des Schritts M3 als auch im Rahmen des Schritts M4 abgetastet wird.

Allgemein zeichnet sich das Verfahren der Erfindung dadurch aus, dass Relativbewegungen mit dem Taster 3 der Meßvorrichtung 10 so ausgeführt werden, dass der Taster 3 entlang der Zahnflanke 7.1 geführt wird, wobei während dieser Relativbewegungen
∘ für mehrere Stellen der Zahnflanke 7.1 innerhalb des Maximalbereichs Fmax Istmeßwerte mit einer ersten Auflösung bereitgestellt werden, und
∘ für mehrere Stellen der Zahnflanke 7.1 innerhalb des kritischen Bereichs Fk Istmeßwerte mit einer zweiten Auflösung bereitgestellt werden, wobei die zweite Auflösung höher ist als die erste Auflösung.

Es ist bei allen Ausführungsformen aber auch möglich das Abtasten mit der ersten Auflösung auf den Maximalbereich Fmax ausserhalb des kritischen Bereichs Fk zu beschränken.

Das Verfahren der Erfindung kann bei allen Ausführungsformen so durchgeführt werden, dass der Schritt M4 vor dem Schritt M3 durchgeführt wird.

Das Verfahren der Erfindung kann bei allen Ausführungsformen so durchgeführt werden, dass die Schritte M3 und M4 zum Teil zeitgleich durchgeführt werden. Wenn man z.B. die 2. Zeile (von dem Zahnkopf 8.1 ausgehend) des Gitters G der Fig. 2C mit konstanter Geschwindigkeit von links nach rechts abtastet, so kann durch Anpassen des Auslesetaktes die Auflösung im Bereich Fk erhöht werden. Konkret wird hier der Auslesetakt verdoppelt, um auch an den Zwischengitterpunkten des Gitters G1 Istmeßwerte zu erhalten. Bei dem Beispiel der Fig. 2C wird dann in der kompletten untersten Zeile wieder mit der Auflösung des Gitters G abgetastet.

Der kritische Bereich Fk kann bei allen Ausführungsformen z.B. dem Tragbereich der Zahnflanke 7.1 entsprechen, er kann einen Tragbereich der Zahnflanke 7.1 einschliessen, oder er kann aus Daten (z.B. per Simulation ermittelt) betreffend eines Tragbereichs der Zahnflanke 7.1 abgeleitet wird.

Die Lage des Tragbereichs auf der Zahnflanke 7.1 kann beispielweise aus Auslegungsdaten abgeleitet werden, die beim Auslegen des Zahnradbauteils 11 ermittelt wurden.

Die Lage des Tragbereichs auf der Zahnflanke 7.1 kann beispielweise aus einem Datensatz abgeleitet werden, wobei Verlagerungsanpassungen der Lage des Tragbereichs vorgenommen werden, die unter Last des Zahnradbauteils 11 auftreten, um den kritischen Bereich Fk anhand von entsprechend angepassten Daten zu ermitteln.

Die Lage des kritischen Bereichs Fk auf der Zahnflanke 7.1 kann beispielweise auch unter Berücksichtigung des Anregungsverhaltens beim Paaren des Zahnradbauteils 11 mit einem anderen Zahnradbauteil ermittelt werden. Das Anregungsverhalten kann mittels Simulation und/oder Messung untersucht werden, um dann einen oder mehrere Bereiche der Zahnflanke 7.1 zu ermitteln, der/die genauer untersucht werden sollen. Der kritische Bereich Fk kann dann so definiert werden, dass er den/die Bereiche einschliesst.

Der kritische Bereich Fk kann bei allen Ausführungsformen anhand einer rechnerischen Kontaktanalyse definiert werden.

Der kritische Bereich Fk kann bei allen Ausführungsformen auch anhand des Verlauf einer Eingriffsline definiert werden.

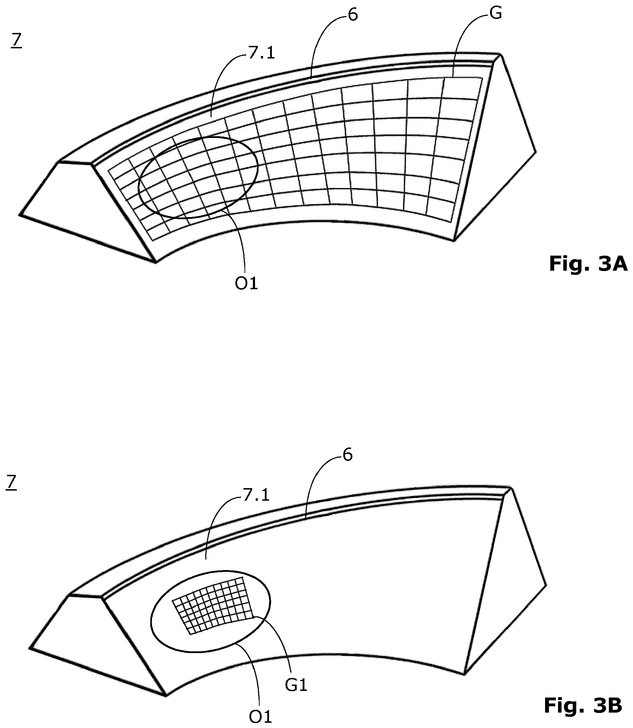

Fig. 3A zeigt eine schematische Perspektivansicht eines einzelnen Zahnes 7 eines spiralverzahnten Zahnradbauteils 11, wobei dieser beispielhaft gezeigte Zahn 7 an der konkaven Flanke 7.1 mit einer Kopffase 6 versehen ist. Die Dimensionen der Kopffase 6 sind in etwa in ihrer wirklichen Grösse dargestellt. Der Zahn 7 verjüngt sich von der Ferse (rechts im Bild) zur Zehe (links im Bild). Die Zahnhöhe an der Ferse ist grösser als die Zahnhöhe an der Zehe.

Auf der Flanke 7.1 ist ein beispielhaftes erstes Meßgitter G gezeigt, das hier aus z=8 Reihen und s=14 Spalten besteht, wobei beim Messen von Zahnrädern ungerade Zahlen üblicher sind. In Fig. 3A ist zu erkennen, dass dieses Meßgitter G so auf die Flanke 7.1 gelegt wurde, dass es rundherum einen Randabstand gibt. Anders als in den Figuren 2A bis 2C, wo gleichmässige Meßgitter G und G1 in der Radialprojektion definiert wurden, wurde das Meßgitter G der Fig. 3A auf der realen Sollflanke als gleichmässiges Meßgitter G definiert.

In Fig. 3A ist ein kritischer Bereich Fk durch ein Oval O1 gekennzeichnet. In diesem kritischen Bereich Fk hat die Flanke 7.1 lokal eine Unregelmässigkeit der Oberfläche. Im Rahmen des Messens der Flanke 7.1, soll konkret diese Unregelmässigkeit untersucht werden. Daher wird das zweite Meßgitter G1 so festgelegt, dass es Auskünfte über die Oberflächeneigenschaft im kritischen Bereich Fk ermöglicht. In Fig. 3B ist anhand eines Beispiels das zweite Meßgitter G1 gezeigt. Das Gitter G1 besteht hier aus z=7 Reihen und s=11 Spalten. Das zweite Meßgitter G1 liegt innerhalb des kritischen Bereichs Fk, der auch in Fig. 3B durch das Oval O1 gekennzeichnet ist.

Die erwähnten Meßgitter G und/oder G1, können bei allen Ausführungsformen anhand einer Projektion der betroffenen Flanke definiert werden, oder sie können auf der realen Sollflanke definiert werden.

Vorzugsweise haben die Meßgitter G und/oder G1 bei allen Ausführungsformen eine regelmässige Form, wobei diese regelmässige Form in einer Schnittdarstellung und/oder in einer Projektion der Flanke 7.1 und/oder auf der realen Sollflanke definiert sein können.

Die Meßgitter G und/oder G1 können bei allen Ausführungsformen aber auch eine unregelmässige Form mit variabler Netzdichte haben.

Das zweite Meßgitter G1 kann bei allen Ausführungsformen auch als Teilbereich des ersten Meßgitters G1 definiert sein, indem lokal die Netzdichte erhöht wird, wie in Fig. 3C anhand eines Beispiels gezeigt. Vorzugsweise wird beim lokalen Erhöhen der Netzdichte entweder die Spaltenweite oder die Zeilenweite reduziert (in Fig. 3C wurde die Spaltenweite reduziert). Es ist der Vorteil einer solchen Ausführungsform mit reduzierter Spalten- oder Zeilenweite, dass automatisch ein geometrisch exakter Bezug zwischen den ersten Gitter G und dem zweiten Gitter G1 gegeben ist.

Gemäß Erfindung wird der Taster 3, der in Fig. 4 eine Tastkugel 4 umfasst, über die abzutastende Oberfläche (hier die Zahnflanke 7.1) bewegt. In Fig. 4 ist ein Kegelradritzel als Zahnradbauteil 11.2 gezeigt, wobei dieses Zahnradbauteil 11.2 vertikal eingespannt ist (z.B. wie in Fig. 1 gezeigt).

Die Tastkugel 4 wird beim Messen über die abzutastende Zahnflanke 7.1 gezogen oder geschoben. Falls die Tastkugel 4 z.B. ausgehend vom Zahnfuß 8.2 in Richtung des Zahnkopfes 8.1 des Zahnes 7 gezogen wird, so wird der Taster 3 z.B. durch das überlagerte Ausführen zweier Linearbewegungen gezogen, während das Zahnradbauteil 11 im Gegenuhrzeigersinn gedreht wird, damit die Tastkugel 4 beim Messen stets mit einem gleichbleibenden Winkel zur Zahnflanke 7.1 ausgerichtet ist. Das Drehen des Zahnradbauteils 11 ist in Fig. 1 durch den Pfeil ω1 angedeutet. Die Rotationsachse des Zahnradbauteils 11 (Werkstückrotationsachse genannt) ist in Fig. 1 und Fig. 4 mit A1 bezeichnet.

Die Tastkugel 4 sitzt im gezeigten Beispiel am vorderen Ende eines schlanken Tastarms 5, der bewegbar an einem Turm 1 der Meßvorrichtung 10 sitzen kann, wie in Fig. 1 angedeutet.

Das Verfahren der Erfindung kommt vorzugsweise in einer Meßvorrichtung 10 zum Einsatz, die mit mindestens einem Taster 3 ausgestattet ist. Die Meßvorrichtung 10 umfasst numerisch steuerbare Achsen, um den Taster 3 relativ zu der Zahnflanke 7.1 eines Zahnradbauteils 11 bewegen zu können. In Fig. 1 ist eine Steuerung NC vorgesehen, welche die numerisch steuerbaren Achsen bewegt und kontrolliert. Die Meßvorrichtung 10 zeichnet sich dadurch aus, dass das Verfahren der Erfindung in der Steuerung NC implementiert ist. Vorzugsweise ist das Verfahren der Erfindung in Form eines Regelsatzes programmiert, der von der Steuerung NC geladen und ausgeführt werden kann.

Beim Messen entlang einer Spalte s eines Gitters G oder G1, kann die erforderliche Relativbewegung z.B. durch ein numerisch kontrolliertes Drehen ω1 des Zahnradbauteils 11 und ein numerisch kontrolliertes lineares Verlagern des Tasters 3 z.B. parallel zur y- und z-Achse erzeugt werden. Beim Messen entlang einer Reihe ze eines Gitters G oder G1, kann die erforderliche Relativbewegung wiederum durch ein numerisch kontrolliertes lineares Verlagern des Tasters 3 kombiniert mit einem numerisch kontrollierten Drehen ω1 des Zahnradbauteils 11 erzeugt werden. Bei komplex geformten Zahnflanken 7.1, wie in Fig. 4 gezeigt, sind überlagerte Bewegungen mehrerer Achsen der Meßvorrichtung 10 erforderlich. In Fig. 4 ist auf der Zahnflanke 7.1 ein kleiner Ausschnitt eines Meßgitters gezeigt.

**Bezugszeichen:**

| | |
|---|---|
| Turm | 1 |
| Taster | 3 |
| Tastspitze oder -kugel | 4 |
| Hebelarm / Tastarm | 5 |
| Kopffase | 6 |
| Zahn | 7 |
| Zahnflanke | 7.1 |
| Zahnkopf | 8.1 |
| Zahnfuß | 8.2 |
| äusseres Zahnende | 8.3 |
| inneres Zahnende | 8.4 |
| Messgerät / Meßvorrichtung | 10 |
| Zahnradbauteil | 11 |
| Tellerrad | 11.1 |
| | |
| Werkstückrotationsachse | A1 |
| kritischer Bereich | Fk |
| Maximalbereich | Fmax |
| Gitter | G |
| Gitter | G1 |
| (numerische) Steuerung | NC |
| Oval | O1 |
| Werkstückspindelachse | R1 |
| Spalten | s |
| Tragbild | T1 |
| Reihen | ze |
| Drehbewegung | ω1 |
| Koordinatensystem | x, y, z |

## Patentansprüche

1. Verfahren zum Durchführen einer Berührungsmessung an mindestens einer Zahnflanke (7.1) eines Zahnradbauteils (11), mit einem schaltenden Taster (3) einer Meßvorrichtung (10) oder mit einem messenden Taster (3) einer Meßvorrichtung (10), wobei der Taster (3) eine Tastspitze, Tastkufe oder Tastkugel (4) umfasst, mit den Schritten:
- Vorgeben eines Maximalbereichs (Fmax) bezogen auf die Zahnflanke (7.1),
- Vorgeben eines kritischen Bereichs (Fk) bezogen auf die Zahnflanke (7.1), wobei der kritische Bereich (Fk) den Maximalbereich (Fmax) mindestens teilweise überlappt,
- Ausführen von Relativbewegungen mit dem Taster (3), wobei der Taster (3) so entlang der Zahnflanke (7.1) geführt wird, dass
∘ für mehrere Stellen der Zahnflanke (7.1) innerhalb des Maximalbereichs (Fmax) Istmeßwerte mit einer ersten Auflösung bereitgestellt werden, und dass
∘ für mehrere Stellen der Zahnflanke (7.1) innerhalb des kritischen Bereichs (Fk) Istmeßwerte mit einer zweiten Auflösung bereitgestellt werden, wobei die zweite Auflösung höher ist als die erste Auflösung.

2. Verfahren nach Anspruch 1, **dadurch gekennzeichnet, dass** das Bereitstellen der Istmeßwerte des Maximalbereichs (Fmax) beim Ausführen von ersten Relativbewegungen des Taster (3) erfolgt, und dass das Bereitstellen der Istmeßwerte des kritischen Bereichs (Fk) beim Ausführen von zweiten Relativbewegungen erfolgt.

3. Verfahren nach Anspruch 1, **dadurch gekennzeichnet, dass** das Bereitstellen der Istmeßwerte des Maximalbereichs (Fmax) und das Bereitstellen der Istmeßwerte des kritischen Bereichs (Fk) im Rahmen einer Abtastprozedur erfolgt.

4. Verfahren nach Anspruch 2, **dadurch gekennzeichnet, dass** beim Ausführen der ersten Relativbewegungen nur Istmeßwerte außerhalb des kritischen Bereichs (Fk) bereitgestellt werden.

5. Verfahren nach Anspruch 2, **dadurch gekennzeichnet, dass** beim Ausführen der ersten Relativbewegungen Istmeßwerte auch innerhalb des kritischen Bereichs (Fk) bereitgestellt werden.

6. Verfahren nach einem der Ansprüche 1 bis 5, **dadurch gekennzeichnet, dass** für den Maximalbereich (Fmax) und/oder für den kritischen Bereich (Fk) ein Meßgitter mit konstanter Netzdichte vorgegeben werden kann.

7. Verfahren nach einem der Ansprüche 1 bis 5, **dadurch gekennzeichnet, dass** für den Maximalbereich (Fmax) und/oder für den kritischen Bereich (Fk) ein Meßgitter mit variabler Netzdichte vorgegeben werden kann.

8. Verfahren nach einem der Ansprüche 1 bis 7, **dadurch gekennzeichnet, dass** der kritische Bereich (Fk) einem Tragbereich der Zahnflanke (7.1) entspricht, oder einen Tragbereich der Zahnflanke (7.1) einschließt, oder aus Daten betreffend eines Tragbereichs der Zahnflanke (7.1) abgeleitet wird.

9. Verfahren nach Anspruch 8, **dadurch gekennzeichnet, dass** die Lage des Tragbereichs auf der Zahnflanke (7.1) aus Auslegungsdaten abgeleitet wird, die beim Auslegen des Zahnradbauteils (11) ermittelt wurden.

10. Verfahren nach Anspruch 8, **dadurch gekennzeichnet, dass**
- die Lage des Tragbereichs auf der Zahnflanke (7.1) aus einem Datensatz abgeleitet wird, und dass
- Verlagerungsanpassungen der Lage des Tragbereichs vorgenommen werden, die unter Last des Zahnradbauteils (11) auftreten, um den kritische Bereich (Fk) anhand von entsprechend angepassten Daten zu ermitteln.

11. Verfahren nach einem der Ansprüche 1 bis 7, **dadurch gekennzeichnet, dass** der kritische Bereich (Fk) einem Bereich der Zahnflanke (7.1) entspricht, oder einen Bereich der Zahnflanke (7.1) einschließt, oder aus Daten betreffend eines Bereichs der Zahnflanke (7.1) abgeleitet wird, der für das Anregungsverhalten beim Paaren des Zahnradbauteils (11) mit einem anderen Zahnradbauteil relevant ist.

12. Verfahren nach einem der Ansprüche 1 bis 7, **dadurch gekennzeichnet, dass** in einem vorbereitenden Schritt unter Einsatz eines Rechners eine rechnerbasierte Kontaktanalyse des Zahnradbauteils (11) durchgeführt wird, um dann anhand der Kontaktanalyse den kritischen Bereich (Fk) festzulegen.

13. Verfahren nach einem der vorhergehenden Ansprüche, **dadurch gekennzeichnet, dass** der Maximalbereich (Fmax) bezogen auf die Zahnflanke (7.1) vorgegeben wird, indem
- ein Randbereich definiert wird, oder
- ein Randabstand definiert wird,
wobei der Maximalbereich (Fmax) den Randbereich oder den Randabstand ausschließt.

14. Verfahren nach Anspruch 12, **dadurch gekennzeichnet, dass** der Maximalbereich (Fmax) in einer Radialprojektion der Zahnflanke einen Polygonenzug als Umfang aufweist.

15. Verfahren nach einem der vorhergehenden Ansprüche 1 bis 5, **dadurch gekennzeichnet, dass** die erste Auflösung durch eine erste Anzahl (ze) an Zeilen und Spalten (s) und die zweite Auflösung durch eine zweite Anzahl (ze) an Zeilen und Spalten (s) definierbar ist, wobei die zweite Anzahl ein Gitter (G1) mit höherer Dichte vorgibt als die erste Anzahl.

16. Verfahren nach einem der vorhergehenden Ansprüche 1 - 5, **dadurch gekennzeichnet, dass** die erste Auflösung durch eine erste Gitterstruktur (G) und die zweite Auflösung durch eine zweite Gitterstruktur (G1) definierbar ist, wobei die zweite Gitterstruktur (G1) eine höherer Dichte vorgibt als die erste Gitterstruktur (G).

17. Verfahren nach einem der vorhergehenden Ansprüche, **dadurch gekennzeichnet, dass** vor dem Vorgeben des kritischen Bereichs (Fk) eine erste Messung des Zahnradbauteils (11) in der Meßvorrichtung (10) oder in einer anderen Meßvorrichtung vorgenommen wird.

18. Verfahren nach einem der vorhergehenden Ansprüche 1 - 15, **dadurch gekennzeichnet, dass** vor dem Vorgeben des kritischen Bereichs (Fk) eine rechnerische Kontaktanalyse vorgenommen wird.

19. Meßvorrichtung (10) mit mindestens einem schaltenden Taster (3), oder mit einem messenden Taster (3), wobei die Meßvorrichtung (10) zur Berührungsmessung an mindestens einer Zahnflanke (7.1) eines Zahnradbauteils (11) ausgelegt ist, wobei der Taster (3) eine Tastspitze, Tastkufe oder Tastkugel (4) umfasst und wobei die Meßvorrichtung (10) eine Steuerung (NC) umfasst, in der das Verfahren nach einem der vorhergehenden Ansprüche 1 - 18 implementiert ist.

## Claims

1. Method for carrying out a contact measurement on at least one tooth flank (7.1) of a gear workpiece (11), using a switching probe (3) of a measuring device (10) or using a measuring probe (3) of a measuring device (10), wherein the probe (3) comprises a probe tip, probe skid, or probe ball (4), comprising the following steps:
- specifying a maximum region (Fmax) in relation to the tooth flank (7.1),
- specifying a critical region (Fk) in relation to the tooth flank (7.1), wherein the critical region (Fk) at least partially overlaps the maximum region (Fmax),
- executing relative movements using the probe (3), wherein the probe (3) is guided along the tooth flank (7.1) such that
- for multiple points of the tooth flank (7.1) within the maximum region (Fmax), actual measured values having a first resolution are provided, and
- for multiple points of the tooth flank (7.1) within the critical region (Fk), actual measured values having a second resolution are provided, wherein the second resolution is higher than the first resolution.

2. Method according to claim 1, **characterized in that** the provision of the actual measured values of the maximum region (Fmax) occurs during the execution of first relative movements of the probe (3), and the provision of the actual measured values of the critical region (Fk) occurs during the execution of second relative movements.

3. Method according to claim 1, **characterized in that** the provision of the actual measured values of the maximum region (Fmax) and the provision of the actual measured values of the critical region (Fk) occur in the scope of a scanning procedure.

4. Method according to claim 2, **characterized in that** during the execution of the first relative movements, only actual measured values outside the critical region (Fk) are provided.

5. Method according to claim 2, **characterized in that** during the execution of the first relative movements, actual measured values are also provided within the critical region (Fk).

6. Method according to any one of claims 1 to 5, **characterized in that** a measurement grid having constant network density can be specified for the maximum region (Fmax) and/or for the critical region (Fk).

7. Method according to any one of claims 1 to 5, **characterized in that** a measurement grid having variable network density can be specified for the maximum region (Fmax) and/or for the critical region (Fk).

8. Method according to any one of claims 1 to 7, **characterized in that** the critical region (Fk) corresponds to a bearing region of the tooth flank (7.1), or includes a bearing region of the tooth flank (7.1), or is derived from data relating to a bearing region of the tooth flank (7.1).

9. Method according to claim 8, **characterized in that** the position of the bearing region on the tooth flank (7.1) is derived from design data, which were determined during the design of the gear workpiece (11).

10. Method according to claim 8, **characterized in that**
- the position of the bearing region on the tooth flank (7.1) is derived from a data set, and
- displacement adaptations of the position of the bearing region are performed, which occur under load of the gear workpiece (11), to determine the critical region (Fk) on the basis of correspondingly adapted data.

11. Method according to any one of claims 1 to 7, **characterized in that** the critical region (Fk) corresponds to a region of the tooth flank (7.1), or includes a region of the tooth flank (7.1), or is derived from data relating to a region of the tooth flank (7.1), which is relevant for the excitation behavior upon pairing of the gear workpiece (11) with another gear workpiece.

12. Method according to any one of claims 1 to 7, **characterized in that**, in a preparatory step using a computer, a computer-based contact analysis of the gear workpiece (11) is carried out, to then establish the critical region (Fk) on the basis of the contact analysis.

13. Method according to any one of the preceding claims, **characterized in that** the maximum region (Fmax) is specified in relation to the tooth flank (7.1), **in that**
- a peripheral region is defined, or
- a peripheral spacing is defined, wherein the maximum region (Fmax) excludes the peripheral region or the peripheral spacing.

14. Method according to claim 12, **characterized in that** the maximum region (Fmax) in a radial projection of the tooth flank has a polygon train as the circumference.

15. Method according to any one of preceding claims 1 to 5, **characterized in that** the first resolution is definable by a first number (ze) of lines and columns (s) and the second resolution is definable by a second number (ze) of lines and columns (s), wherein the second number specifies a grid (G1) having higher density than the first number.

16. Method according to any one of preceding claims 1 to 5, **characterized in that** the first resolution is definable by a first grid structure (G) and the second resolution is definable by a second grid structure (G1), wherein the second grid structure (G1) specifies a higher density than the first grid structure (G).

17. Method according to any one of the preceding claims, **characterized in that** before the specification of the critical region (Fk), a first measurement of the gear workpiece (11) is performed in the measuring device (10) or in another measuring device.

18. Method according to any one of preceding claims 1 to 15, **characterized in that** before the specification of the critical region (Fk), a computer contact analysis is performed.

19. Measuring device (10) having at least one switching probe (3), or having a measuring probe (3), wherein the measuring device (10) is designed for contact measurement on at least one tooth flank (7.1) of a gear workpiece (11), wherein the probe (3) comprises a probe tip, probe skid, or probe ball (4) and wherein the measuring device (10) comprises a controller (NC), in which the method according to any one of preceding claims 1 to 18 is implemented.

## Revendications

1. Procédé pour réaliser une mesure de contact sur au moins un flanc de dent (7.1) d'un composant à roue dentée (11), comprenant un palpeur à commutation (3) d'un dispositif de mesure (10) ou un palpeur de mesure (3) d'un dispositif de mesure (10), le palpeur (3) comprenant une pointe, un patin ou une bille de palpage (4) et le procédé comprenant les étapes consistant à
- déterminer une plage maximale (Fmax) par rapport au flanc de dent (7.1),
- déterminer une plage critique (Fk) par rapport au flanc de dent (7.1), la plage critique (Fk) chevauchant au moins partiellement la plage maximale (Fmax),
- réaliser des mouvements relatifs avec le palpeur (3), le palpeur (3) étant guidé le long du flanc de dent (7.1) de sorte que
• Il est fourni pour plusieurs points du flanc de dent (7.1) à l'intérieur de la plage maximale (Fmax) des valeurs de mesure réelles avec une première résolution, et
• Il est fourni pour plusieurs points du flanc de dent (7.1) à l'intérieur de la plage critique (Fk) des valeurs de mesure réelles avec une deuxième résolution, la deuxième résolution étant supérieure à la première résolution.

2. Procédé selon la revendication 1, **caractérisé en ce que** la fourniture des valeurs de mesure réelles de la plage maximale (Fmax) intervient en effectuant des premiers mouvements relatifs du palpeur (3), et **en ce que** la fourniture des valeurs de mesure réelles de la plage critique (Fk) intervient en effectuant des deuxièmes mouvements relatifs.

3. Procédé selon la revendication 1, **caractérisé en ce que** la fourniture des valeurs de mesure réelles de la plage maximale (Fmax) et la fourniture des valeurs de mesure réelles de la plage critique (Fk) interviennent dans le cadre d'une procédure de palpage.

4. Procédé selon la revendication 2, **caractérisé en ce que** lorsqu'on effectue les premiers mouvements relatifs, il est fourni uniquement des valeurs de mesure réelles en dehors de la plage critique (Fk).

5. Procédé selon la revendication 2, **caractérisé en ce que** lorsqu'on effectue les premiers mouvements relatifs, il est fourni des valeurs de mesure réelles également dans la plage critique (Fk).

6. Procédé selon l'une des revendications 1 à 5, **caractérisé en ce que** pour la plage maximale (Fmax) et/ou pour la plage critique (Fk), il peut être défini une grille de mesure avec un maillage constant.

7. Procédé selon l'une des revendications 1 à 5, **caractérisé en ce que** pour la plage maximale (Fmax) et/ou pour la plage critique (Fk), il peut être défini une grille de mesure avec un maillage variable.

8. Procédé selon l'une des revendications 1 à 7, **caractérisé en ce que** la plage critique (Fk) correspond à une zone de support du flanc de dent (7.1) ou englobe une zone de support du flanc de dent (7.1), ou est dérivée de données concernant une zone de support du flanc de dent (7.1).

9. Procédé selon la revendication 8, **caractérisé en ce que** la position de la zone de support sur le flanc de dent (7.1) est dérivée de données de conception qui ont été transmises lors de la conception du composant à roue dentée (11).

10. Procédé selon la revendication 8, **caractérisé en ce que**
- la position de la zone de support sur le flanc de dent (7.1) est dérivée d'un ensemble de données, et **en ce**
- **qu'**il est procédé à des adaptations de déplacement de la position de la zone de support qui apparaissent sous la charge du composant à roue dentée (11) pour déterminer la plage critique (Fk) à l'aide de données adaptées en conséquence.

11. Procédé selon l'une des revendications 1 à 7, **caractérisé en ce que** la plage critique (Fk) correspond à une zone du flanc de dent (7.1) ou englobe une zone du flanc de dent (7.1) ou est dérivée de données concernant une zone du flanc de dent (7.1) qui est pertinente pour le comportement de stimulation lorsque l'on associe le composant à roue dentée (11) avec un autre composant à roue dentée.

12. Procédé selon l'une des revendications 1 à 7, **caractérisé en ce que**, dans une étape préparatoire, il est réalisé à l'aide d'un ordinateur une analyse de contact informatisée du composant à roue dentée (11) pour ensuite déterminer la plage critique (Fk) à l'aide de l'analyse de contact.

13. Procédé selon l'une des revendications précédentes, **caractérisé en ce que** la plage maximale (Fmax) en rapport avec le flanc de dent (7.1) est déterminée
- en définissant une zone de bordure, ou
- en définissant une distance de bordure,
la plage maximale (Fmax) excluant la zone ou la distance de bordure.

14. Procédé selon la revendication 12, **caractérisé en ce que** la plage maximale (Fmax), dans une projection radiale du flanc de dent, présente comme périmètre les traits d'un polygone.

15. Procédé selon l'une des revendications 1 à 5, **caractérisé en ce que** la première résolution peut être définie par un premier nombre (ze) de lignes et de colonnes (s) et la deuxième résolution par un deuxième nombre (ze) de lignes et de colonnes (s), le deuxième nombre donnant une grille (G1) avec une plus grande densité que le premier nombre.

16. Procédé selon l'une des revendications 1 à 5, **caractérisé en ce que** la première résolution peut être définie par une première structure de grille (G) et la deuxième résolution par une deuxième structure de grille (G1), la deuxième structure de grille (G1) donnant une densité supérieure à la première structure de grille (G).

17. Procédé selon l'une des revendications précédentes, **caractérisé en ce que**, avant de définir la plage critique (Fk), il est procédé à une première mesure du composant à roue dentée (11) dans le dispositif de mesure (10) ou dans un autre dispositif de mesure.

18. Procédé selon l'une des revendications 1 à 15, **caractérisé en ce que**, avant de définir la plage critique (Fk), il est procédé à une analyse de contact informatisée.

19. Dispositif de mesure (10) comprenant au moins un palpeur à commutation (3) ou un palpeur de mesure (3), le dispositif de mesure (10) étant conçu pour mesurer par contact au moins un flanc de dent (7.1) d'un composant à roue dentée (11), le palpeur (3) comprenant une pointe, un patin ou une bille de palpage (4), et le dispositif de mesure (10) comprenant une commande (NC) dans laquelle est mis en oeuvre le procédé selon l'une des revendications 1 à 18.
